# EUROPEAN PATENT APPLICATION

(11) **EP 4 707 198 A1**
(43) Date of publication of application: **11.03.2026**
(21) Application number: 25749160.5
(22) Date of filing: 03.01.2025
(51) Int. Cl.: B65D 85/10, B65D 65/40, B32B 9/06, B32B 7/12, D21H 17/34, D21H 13/14, D21H 17/67, D21H 27/00, C09D 7/40

(54) **CIGARETTE PACKAGING MATERIAL AND CIGARETTE CASE INCLUDING SAME**

(30) Priority: 30.01.2024 KR 20240013661; 31.01.2024 KR 20240014745; 31.01.2024 KR 20240014746; 31.01.2024 KR 20240014747
(71) Applicant: KT&G Corporation, Daedeok-gu Daejeon 34337 (KR)
(72) Inventor: KIM, Soo Ho, Daejeon 34128 (KR)
(74) Representative: Ter Meer Steinmeister & Partner
(86) International application number: PCT/KR2025/000162
(87) International publication number: WO 2025/164977

(57) **Abstract**

The present invention relates to an eco-friendly cigarette packaging material having excellent physical properties. According to one aspect, provided are: a cigarette packaging material comprising polyolefin and calcium carbonate; and a cigarette case including the cigarette packaging material.

## Description

### Technical Field

The present disclosure relates to a packaging material for cigarettes, and more specifically, to a packaging material for cigarettes and a cigarette case including the same.

### Background Art

In the cigarette manufacturing process, to package cigarettes in units of two or more packs, a method is used in which the cigarettes supplied in the number of cigarettes equivalent to one pack are surrounded by an inner liner and then an outer package is wrapped around the inner liner.

Meanwhile, the outer package and inner liner are generally composed of paper. Such paper is produced from pulp produced by mechanically or chemically treating wood or other plants.

### DISCLOSURE

### Technical Problem

Generally, when paper is used as a packaging material for cigarettes, there is a problem in that a manufacturing process of mechanically or chemically treating wood or other plants is required, causing forest damage. In addition, there is a problem in that, because the paper packaging material contains bleaching agents, it causes damage such as redness or fissure when in contact with the skin.

In the case of an inner liner made of paper, there are problems in that the inner liner excessively absorbs the moisture and flavor contained in tobacco cut filler due to its excessively high moisture permeability, so that the moisture and flavor of the tobacco cut filler are not maintained, and in that dead-fold properties, which are the properties of maintaining the folded shape after the folding process performed in the outer packaging machine, are not sufficiently exhibited.

Additionally, when in the case of an outer package made of paper, there are problems in that the outer package is easily wet by water due to the high moisture permeability of the paper, and in that a bleaching agent added to achieve whiteness has a harmful effect on the human body and the environment.

### Technical Solution

According to one aspect of the present disclosure, there is provided a packaging material for cigarettes that is environmentally friendly due to its high biodegradability and is harmless to the human body.

According to another aspect of the present disclosure, there is provided a packaging material for cigarettes having properties suitable for use as an inner liner or an outer package.

According to still another aspect of the present disclosure, there is provided a packaging material for cigarettes having excellent printability due to improved smoothness.

According to yet another aspect of the present disclosure, there is provided a cigarette case including the packaging material for cigarettes.

The objects of the present disclosure are not limited to the objects mentioned above, and other objects and advantages of the present disclosure which are not mentioned above may be understood by the following description and will be more clearly understood from embodiments of the present disclosure. In addition, it will be easily understood that the objects and advantages of the present disclosure may be realized by the means and combinations thereof set forth in the specification.

According to a first aspect of the present disclosure, there is provided a packaging material for cigarettes including a polyolefin and a calcium carbonate.

According to a second aspect of the present disclosure, in the first aspect, the density of the polyolefin may be 0.90 g/cm³ or more and 1.00 g/cm³ or less.

According to a third aspect of the present disclosure, in the first or second aspect, the whiteness of the calcium carbonate may be 94% or more as measured in accordance with ISO 2469.

According to a fourth aspect of the present disclosure, in any one of the first to third aspects, the crystal form of the calcium carbonate may be a precipitated calcium carbonate (PCC) or a ground calcium carbonate (GCC).

According to a fifth aspect of the present disclosure, in any one of the first to fourth aspects, the weight ratio between the polyolefin and the calcium carbonate may be 1:9 or more and 3:7 or less.

According to a sixth aspect of the present disclosure, in any one of the first to fifth aspects, the packaging material for cigarettes may further include stearic acid, and the polyolefin may include a recycled polyolefin.

According to a seventh aspect of the present disclosure, in the sixth aspect, the content of the stearic acid may be 0.1 parts by weight or more and 2 parts by weight or less based on 100 parts by weight of a base material composed of the recycled polyolefin and the calcium carbonate.

According to an eighth aspect of the present disclosure, in any one of the first to seventh aspects, the biodegradability of the packaging material for cigarettes may be 75% or more as measured in accordance with the ISO 14855-1 standard.

According to a ninth aspect of the present disclosure, there is provided a cigarette case including an inner liner and an outer package on the inner liner, wherein at least one of the inner liner and the outer package includes the packaging material for cigarettes according to any one of the first to eighth aspects. Specifically, the inner liner and the outer package may include the packaging material for cigarettes.

According to a tenth aspect of the present disclosure, in the ninth aspect, the outer package may further include paper on the packaging material for cigarettes.

According to an eleventh aspect of the present disclosure, in the tenth aspect, the basis weight of the paper may be 150 g/m² or more and 250 g/m² or less.

According to a twelfth aspect of the present disclosure, in any one of the ninth to eleventh aspects, the inner liner may have a moisture permeability of 20 g/m²·24 hr or less as measured in accordance with the KS M ISO 15106-2 standard under conditions of 38°C and 100% relative humidity (R.H.). Here, the inner liner may include the above-described packaging material for cigarettes.

According to a thirteenth aspect of the present disclosure, in any one of the ninth to twelfth aspects, the outer package may include: a first region including a first paper and a first mineral paper on the first paper; a second region including a second paper and a second mineral paper on the second paper; and an adhesive layer disposed between the first region and the second region, wherein the adhesive layer may be disposed between the first paper and the second mineral paper, and the first mineral paper and the second mineral paper may include the same or different packaging materials for cigarettes.

According to a fourteenth aspect of the present disclosure, in the thirteenth aspect, the adhesive layer may include an ethylene-vinyl acetate copolymer and a plasticizer.

According to a fifteenth aspect of the present disclosure, in the fourteenth aspect, the content of the plasticizer may be 1 part by weight or more and 10 parts by weight or less based on 100 parts by weight of the ethylene-vinyl acetate copolymer.

### Advantageous Effects

The above-described technical solution does not enumerate all the features of the present disclosure. Various features of the present disclosure and the advantages and effects thereof may be understood in more detail with reference to the following detailed description.

According to one aspect of the present disclosure, it is possible to realize a packaging material for cigarettes that is environmentally friendly due to its high biodegradability and is harmless to the human body.

According to another aspect of the present disclosure, it is possible to realize a packaging material for cigarettes having properties suitable for use as an inner liner or an outer package.

According to still another aspect of the present disclosure, it is possible to realize a cigarette case including the packaging material for cigarettes.

In addition to the effects described above, specific effects of the present disclosure will be described together with the specific contents for carrying out the present disclosure. In addition, the effects of the present disclosure are not limited to the effects mentioned above, and may be easily realized by the means and combinations thereof set forth in the specification.

### Brief Description of Drawings

FIG. 1 illustrates a cigarette case according to one embodiment of the present disclosure.
FIG. 2 shows a production system capable of producing mineral paper that is included in a packaging material for cigarettes according to some embodiments of the present disclosure.
FIG. 3 shows that one side of an outer package according to one embodiment of the present disclosure is peeled off.
FIG. 4 is a cross-sectional view taken along line A-A' of FIG. 3.
FIG. 5 is a graph showing the changes in moisture contents of tobacco cut fillers in inner liners according to Example 1-1 and Comparative Example 1.
FIG. 6 is a graph showing the changes in moisture contents of inner liners according to Example 1-1 and Comparative Example 1 as a function of storage time under different relative humidity conditions.

### Best Mode

In the present specification, singular expressions include plural expressions unless the context clearly indicates otherwise.

When multiple embodiments are described in the present specification, these embodiments may be combined with each other unless otherwise stated. The effects of the present disclosure may be defined as including not only the effect resulting from each embodiment itself, but also the effect resulting from the organic combination of embodiments. For example, even if Embodiments 1 and 2 are described independently in the present specification, effects resulting from the organic combination of Embodiments 1 and 2 may also be included in the effects of the present disclosure, unless the context clearly indicates otherwise.

As used herein, the term "connection" means not only that certain members are connected directly to each other, but also that they are connected indirectly via a third member interposed therebetween.

In the present specification, a numerical range represented by the term "to" means a range including numerical values described before and after the term "to" as a lower limit value and an upper limit value. For example, if "a to b" is described in the specification, it may be understood that greater than or equal to a and smaller than or equal to b (from a to b) is described.

In the present specification, when multiple numerical values are disclosed as the upper and lower limits of any numerical range, respectively, the numerical range disclosed in the present specification may be understood as a range of any numerical values including any one of the multiple lower limit values and any one of the multiple upper limit values as the lower limit value and the upper limit value, respectively. For example, when "a or more, or b or more, and c or less, or d or less" is described, it may be understood that a to c, a to d or less, b to c, or b to d is described.

In this specification, the term "layer" or "film" may include, when observing a region in which the corresponding layer or film exists, a case where the layer or film is formed only in a portion of the corresponding region, in addition to a case where the layer or film is formed throughout the corresponding region. For example, the surface of the layer or film may be defined as including either a flat form, a non-flat form, and a combination thereof; or a continuous form, a discontinuous form, and a combination thereof. For example, when another member is composed of a layer or film directly on one member, the coverage of the other member with respect to the surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more.

In the present specification, terms such as "about" or "substantially" mean a reasonable amount of deviation of the modified term such that the end result is not significantly changed. These terms may be construed as including a deviation of at least ±5% or at least ±10% of the modified term if this deviation would not negate the meaning of the word it modifies.

In the present specification, the average particle diameter may be defined as the particle diameter (D₅₀) when the cumulative percentage in a volume-based particle size distribution curve measured by a laser diffraction particle size distribution analyzer is 50%.

In the present specification, "weight-average molecular weight" or "number-average molecular weight" is a molecular weight determined in terms of standard polystyrene and may be analyzed by a gel permeation chromatography (GPC) device. For example, the GPC analysis method may be performed using tetrahydrofuran as a developing solvent and may be performed under the analysis conditions of a sample concentration of 5 mg/mL, a sample injection amount of 100 µl, a column temperature of 40°C, and a flow rate of 1 mL/min.

In the present specification, "including at least one of a, b and c" may include a, b or c alone, or may include a combination of two or more selected from the group consisting of a, b and c.

In the present specification, the term "packaging material for cigarettes" may be defined as an element capable of packaging or wrapping cigarettes. Here, "packaging" may include not only a function of maintaining the shape or arrangement of cigarettes by contacting or being connected with the cigarettes, but also a function of maintaining the shape or arrangement of cigarettes even when not in direct contact with the cigarettes. For example, the term "cigarettes" refers to any smokeable product or any smoking article capable of providing a smoking experience, and includes cigarettes, cigars and cigarillos.

According to a first aspect of the present disclosure, there is provided a packaging material for cigarettes including a polyolefin and a calcium carbonate.

In the case of an inner liner made of conventional paper, there are problems in that the inner liner excessively absorbs the moisture and flavor contained in tobacco cut filler over a long period of time due to its excessively high moisture permeability, so that the moisture content and fragrance of the tobacco cut filler are not maintained, and in that dead-fold properties, which are the properties of maintaining the folded shape after the folding process performed in the outer packaging machine, are not sufficiently exhibited. Meanwhile, in the case of an outer package made of paper, there are problems in that the outer package is easily wet by water due to the high moisture permeability of the paper, and in that a bleaching agent added to achieve whiteness has a harmful effect on the human body. According to one aspect of the present disclosure, it is possible to realize a packaging material for cigarettes, which is easy to recycle, conserves forest resources, and has high biodegradability, by satisfying the organic combination relationship between a polyolefin and calcium carbonate. According to another aspect of the present disclosure, it is possible to realize a packaging material for cigarettes, which is harmless to the human body, by excluding the use of a bleaching agent for imparting a white color to the packaging material. According to still another aspect of the present disclosure, it is possible to realize properties suitable for an inner liner or an outer package by satisfying the organic combination relationship.

Hereinafter, the configuration of the present disclosure will be described in more detail.

### 1. Packaging Material for Cigarettes

### Polyolefin

The polyolefin according to the present disclosure may serve as a binder that binds or connects calcium carbonate particles to each other.

In some embodiments of the present disclosure, the polyolefin may include polyethylene, and specifically, may include a polyethylene having a density of 0.90 g/cm³ to 1.00 g/cm³. According to some embodiments of the present disclosure, as the polyolefin includes the polyethylene, it may exhibit mechanical properties such as tensile strength suitable for an inner liner for cigarettes.

Specifically, the density of the polyolefin may be 0.90 g/cm³ or more, 0.91 g/cm³ or more, 0.92 g/cm³ or more, 0.93 g/cm³ or more, or 0.94 g/cm³ or more, and may be 0.97 g/cm³ or less, 0.98 g/cm³ or less, 0.99 g/cm³ or less, or 1.00 g/cm³ or less. According to some embodiments of the present disclosure, as the density of the polyolefin is controlled within the above numerical range, the packaging material for cigarettes may exhibit chemical resistance against various external conditions, and exhibit suitable mechanical properties such as tensile strength. For example, the density of the polyolefin may be measured according to JIS K7112.

In some embodiments of the present disclosure, the content of the polyethylene may be at least 90 wt%, at least 91 wt%, at least 92 wt%, at least 93 wt%, at least 94 wt%, at least 95 wt%, at least 96 wt%, at least 97 wt%, at least 98 wt%, at least 99 wt%, or 100 wt%, based on the total weight of the polyolefin. According to some embodiments of the present disclosure, as the content of the polyethylene is controlled within the above numerical range based on the total weight of the polyolefin, the polyolefin may better serve as a binder that binds calcium carbonate particles to each other, and at the same time, may have further improved processability and thus exhibit better miscibility with the calcium carbonate.

In some embodiments of the present disclosure, the weight-average molecular weight of the polyolefin may be 200,000 g/mol or more, 250,000 g/mol or more, or 260,000 g/mol or more, and may be 460,000 g/mol or less, 480,000 g/mol or less, or 500,000 g/mol or less. According to some embodiments of the present disclosure, as the weight-average molecular weight of the polyolefin is controlled within the above numerical range, the packaging material for cigarettes may exhibit chemical resistance against various external conditions, and exhibit suitable mechanical properties such as tensile strength.

In some other embodiments of the present disclosure, the polyolefin may include a recycled polyolefin. According to some embodiments of the present disclosure, as a recycled polyolefin produced from waste polyolefin is used as a binder, it is possible to reduce the content of waste polyolefin, thereby providing an environmentally friendly packaging material for cigarettes.

The recycled polyolefin according to the present disclosure may include a polyolefin resin recycled from waste polyolefin material. For example, the recycled polyolefin may be produced by introducing pellet-type waste polyolefin into a mixer and then subjecting the same to mixing and heating processes.

In some examples, the method for producing the recycled polyolefin is not particularly limited and may be a method of producing the recycled polyolefin by introducing waste polyolefin into a mixer and then subjecting the same to mixing and heating processes. Specifically, the method for producing the recycled polyolefin may include: a step of introducing waste polyolefin into a mixer; and a step of producing the recycled polyolefin by adjusting the temperature of the mixer to 150 to 200°C, the mixing speed of the mixer to 30 to 60 rpm, and the mixing time to 5 to 20 minutes.

In some embodiments of the present disclosure, the recycled polyolefin may include recycled polyethylene, and specifically, may include a recycled polyethylene having a density of 0.90 to 1.00 g/cm³. According to some embodiments of the present disclosure, as the recycled polyolefin includes the recycled polyethylene, the recycled polyethylene may be more effectively degraded by geothermal heat when the packaging material for cigarettes is landfilled, and the recycled polyethylene may exhibit mechanical properties suitable for an inner liner or an outer package.

Specifically, the density of the recycled polyethylene may be 0.91 to 1.00 g/cm³, 0.92 to 0.99 g/cm³, 0.93 to 0.98 g/cm³, or 0.94 to 0.97 g/cm³. According to some embodiments of the present disclosure, as the density of the recycled polyethylene satisfies the above numerical range, the packaging material for cigarettes may exhibit chemical resistance against various external conditions, and the recycled polyethylene may exhibit mechanical properties such as tensile strength suitable for an outer package or an inner liner. For example, the density of the recycled polyethylene may be measured according to JIS K7112.

In some embodiments of the present disclosure, the content of the recycled polyethylene may be at least 90 wt%, at least 91 wt%, at least 92 wt%, at least 93 wt%, at least 94 wt%, at least 95 wt%, at least 96 wt%, at least 97 wt%, at least 98 wt%, at least 99 wt%, or 100 wt%, based on the total weight of the recycled polyolefin. According to some embodiments of the present disclosure, as the content of the recycled polyethylene based on the total weight of the recycled polyolefin is within the above numerical range, the recycled polyolefin may better serve as a binder that binds calcium carbonate particles to each other, and at the same time, may have further improved processability and thus exhibit better miscibility with the calcium carbonate.

In another embodiment of the present disclosure, the recycled polyolefin may further include at least one selected from the group consisting of recycled polypropylene, non-renewable polyethylene, and non-renewable polypropylene, in addition to the recycled polyolefin. Here, the "non-renewable polyethylene" and the "non-renewable polypropylene" are not made from waste polyolefin as a raw material, and are general polyethylene or polypropylene commonly used in the art, which may be distinguished from recycled polyethylene or recycled polypropylene. Specifically, the content of at least one selected from the group consisting of the recycled polypropylene, the non-renewable polyethylene, and the non-renewable polypropylene may be 10 wt% or less, 9 wt% or less, 8 wt% or less, 7 wt% or less, 6 wt% or less, 5 wt% or less, 4 wt% or less, 3 wt% or less, 2 wt% or less, 1 wt% or less, or 0.5 wt% or less, based on the total weight of the recycled polyolefin. According to some embodiments of the present disclosure, as the content of at least one selected from the group consisting of the recycled polypropylene, the non-renewable polyethylene, and the non-renewable polypropylene satisfies the above numerical range, the recycled polyolefin may better serve as a binder that binds calcium carbonate particles to each other, and at the same time, may have further improved processability and thus exhibit better miscibility with the calcium carbonate.

In some embodiments of the present disclosure, the weight-average molecular weight of the recycled polyolefin may be 200,000 to 500,000 g/mol, 250,000 to 480,000 g/mol, or 260,000 to 460,000 g/mol. According to some embodiments of the present disclosure, as the weight-average molecular weight of the recycled polyolefin satisfies the above numerical range, the packaging material for cigarettes may exhibit chemical resistance against various external conditions, and the recycled polyolefin may exhibit mechanical properties such as tensile strength suitable for an outer package or an inner liner.

### Calcium Carbonate

A calcium carbonate according to the present disclosure may be an environmentally friendly material that may reinforce the mechanical properties of the packaging material for cigarettes and may be returned to the soil even when landfilled. In addition, the calcium carbonate according to the present disclosure, when included in the packaging material for cigarettes, may have the advantage of eliminating the need to add a bleaching agent to the packaging material for cigarettes, due to the inherent whitening properties of the calcium carbonate. Accordingly, when considering the use of the packaging material for cigarettes that comes into frequent contact with the skin, such as the human hand skin, it is possible to realize a packaging material for cigarettes that is harmless to the human body.

In some embodiments of the present disclosure, the whiteness of the calcium carbonate may be 94% or more, 95% or more, 96% or more, 96 to 98%, or 96 to 97%. Specifically, when the whiteness of the calcium carbonate satisfies the above numerical range, it is possible to realize a packaging material for cigarettes that is harmless to the human body and has high whiteness and opacity without a bleaching agent. For example, the whiteness of the calcium carbonate may be measured in accordance with ISO 2469 using a whiteness measuring device (Elrepho 3300 instrumentation).

In some embodiments of the present disclosure, the crystal form of the calcium carbonate may be a precipitated calcium carbonate (PCC) or a ground calcium carbonate, GCC), and specifically, may be a precipitated calcium carbonate. According to some embodiments of the present disclosure, when the crystal form of the calcium carbonate is a precipitated calcium carbonate, it has the characteristics of low impurity content, high whiteness, and controllable uniform particle size, compared to other crystal forms, and thus it is possible to realize a packaging material for cigarettes, which has a high whiteness, even without a bleaching agent. For example, the crystal form of the calcium carbonate may be analyzed using powder X-ray diffraction (XRD), and specifically, may be analyzed using an XRD instrument (Scintag X'TRA). For example, the XRD analysis conditions may be X-ray Cu-tube, a 2θ angle of 2 to 40°, continuous scan mode, and a scan speed of 0.25 to 5°/min.

For example, the crystal form of the calcium carbonate may vary depending on the method for producing the calcium carbonate. In some examples, the precipitated calcium carbonate may be synthesized through a calcination process of converting limestone into quicklime (CaO), a hydration process of reacting quicklime with water to synthesize slaked lime (Ca(OH)₂), and a carbonation process of reacting the slaked lime with carbon dioxide to produce a precipitated calcium carbonate. In some examples, the ground calcium carbonate is a calcium carbonate obtained from a natural source, such as limestone, marble or chalk, and may be produced by a treatment such as grinding, screening and/or fractionizing in dry and/or wet form, for example by means of a cyclone, a classifier or a centrifuge.

In some embodiments of the present disclosure, the BET (Brunauer, Emmett, Teller) specific surface area of the calcium carbonate may be at least 0.80 m²/g, at least 0.85 m²/g, at least 0.89 m²/g, at least 1 m²/g, at least 2 m²/g, at least 3 m²/g, at least 4 m²/g, 1 to 25 m²/g, 2 to 24 m²/g, 3 to 23 m²/g, or 4 to 22 m²/g. The BET specific surface area of the calcium carbonate is a value obtained by dividing the surface area of the calcium carbonate by the mass thereof, and may affect both the moisture permeability and the mechanical properties of the packaging material for cigarettes. According to some embodiments of the present disclosure, when the BET specific surface area of the calcium carbonate satisfies the above numerical range and when the packaging material for cigarettes is applied to an inner liner, the moisture permeability of the inner liner may be significantly reduced, thereby maintaining the moisture content and flavor of tobacco cut filler, and when the packaging material for cigarettes is applied to an outer package, the outer package may exhibit sufficient stiffness. For example, the BET specific surface area of the calcium carbonate may be measured in accordance with ISO 9277:1995.

In some embodiments of the present disclosure, the average particle size (D₅₀) of the calcium carbonate may be 1 µm or more, 2 µm or more, or 2.5 µm or more, and may be 3 µm or less, 4 µm or less, 5 µm or less, 6 µm or less, 7 µm or less, 8 µm or less, 9 µm or less, or 10 µm or less. Specifically, the average particle size (D₅₀) may be 1 to 10 µm, 2 to 9 µm, 2 to 8 µm, 2 to 7 µm, 2 to 6 µm, or 2.5 to 6 µm. According to some embodiments of the present disclosure, when the average particle diameter (D₅₀) of the calcium carbonate satisfies the above numerical range, the dispersibility of the calcium carbonate mixed with the polyolefin resin may be further improved, so that the mechanical properties and optical properties of the packaging material for cigarettes may be easily controlled. For example, the average particle size (particle size distribution) of the calcium carbonate may be calculated by dispersing measurement-target particles in a dispersion medium, introducing the dispersion into a commercially available laser diffraction particle size analyzer (e.g., Microtrac S3500), and measuring the difference in diffraction pattern depending on particle size when the particles pass through a laser beam.

### Stearic Acid

In some embodiments of the present disclosure, the packaging material for cigarettes may further include stearic acid. Specifically, since the stearic acid has a carboxyl group, which is a hydrophilic functional group, it may impart hydrophilicity to the surface of the polyolefin or the regenerated polyolefin. Accordingly, the stearic acid may contribute to the attachment of various soil microorganisms to the surface of the polyolefin.

The stearic acid according to the present disclosure may further increase the biodegradability of the polyolefin or the regenerated polyolefin, thereby realizing an environmentally friendly packaging material for cigarettes. In general, if stearic acid is not included in a packaging material for cigarettes, a problem may arise in that the landfilled packaging material for cigarettes has low biodegradability even by the action of geothermal heat.

### Relationship between Components

In some embodiments of the present disclosure, the weight ratio between the polyolefin and the calcium carbonate (polyolefin: calcium carbonate) may be 1:9 to 3:7, specifically 1.5:8.5 to 3:7, more specifically 1.5:8.5 to 2:8. According to some embodiments of the present disclosure, as the weight ratio between the polyolefin and the calcium carbonate is controlled within the above numerical range, the packaging material for cigarettes may exhibit excellent mechanical properties such as tensile strength and stiffness, and at the same time, the effect of connecting or bonding calcium carbonate particles to each other may be improved, so that detachment of the calcium carbonate particles may be effectively prevented.

In some embodiments of the present disclosure, the weight ratio between the recycled polyolefin and the calcium carbonate (recycled polyolefin: calcium carbonate) may be 1:9 to 3:7, specifically 1.5:8.5 to 3:7, more specifically 1.5:8.5 to 2:8. According to some embodiments of the present disclosure, when the weight ratio between the recycled polyolefin and the calcium carbonate satisfies the above numerical range, the packaging material for cigarettes may exhibit excellent mechanical properties such as tensile strength and stiffness, and at the same time, the effect of connecting or bonding calcium carbonate particles to each other may be improved, so that detachment of the calcium carbonate particles may be effectively prevented.

In some embodiments of the present disclosure, the content of the stearic acid based on 100 parts by weight of the base material composed of the recycled polyolefin and the calcium carbonate may be 0.1 parts by weight or more, 0.2 parts by weight or more, 0.3 parts by weight or more, 0.4 parts by weight or more, or 0.5 parts by weight or more, and may be 0.6 parts by weight or less, 0.7 parts by weight or less, 0.8 parts by weight or less, 0.9 parts by weight or less, 1 part by weight or less, or 2 parts by weight or less. Specifically, the content of the stearic acid may be 0.1 to 2 parts by weight, 0.1 to 1 part by weight, 0.1 to 0.9 parts by weight, 0.2 to 0.8 parts by weight, 0.3 to 0.7 parts by weight, 0.4 to 0.6 parts by weight, or 0.5 to 0.6 parts by weight. According to some embodiments of the present disclosure, when the content of the stearic acid satisfies the above numerical range, the packaging material for cigarettes may exhibit sufficient mechanical properties while the biodegradation of the recycled polyolefin may be further promoted.

### Properties of Inner Liner

In some embodiments of the present disclosure, the biodegradability of the packaging material for cigarettes may be at least 75%, at least 76%, at least 77%, or at least 78%, as measured in accordance with the ISO 14855-1 standard. For example, the biodegradability of the packaging material for cigarettes may be analyzed in accordance with the ISO 14855-1 standard.

When the packaging material for cigarettes according to some embodiments of the present disclosure is included in an inner liner, the thickness of the inner liner may be 50 µm or more, 60 µm or more, 70 µm or more, 80 µm or more, or 90 µm or more, and may be 95 µm or less, 100 µm or less, 105 µm or less, 110 µm or less, 120 µm or less, 130 µm or less, 140 µm or less, 150 µm or less, 160 µm or less, 170 µm or less, 180 µm or less, 190 µm or less, or 200 µm or less. Specifically, the thickness of the inner liner may be 50 to 200 µm, 60 to 190 µm, 70 to 180 µm, 80 to 170 µm, 90 to 160 µm, 90 to 150 µm, 90 to 140 µm, 90 to 130 µm, 90 to 120 µm, 90 to 110 µm, 90 to 100 µm, or 90 to 95 µm. According to some embodiments of the present disclosure, when the thickness of the inner liner satisfies the above numerical range, the packaging material for cigarettes may exhibit a tensile strength at an appropriate level while the moisture permeability thereof may be reduced to an appropriate level. For example, the thickness of the inner liner may be measured in accordance with KS M ISO 534.

When the packaging material for cigarettes according to some embodiments of the present disclosure is included in an inner liner, the basis weight of the packaging material for cigarettes may be 50 g/m² or more, 60 g/m² or more, 70 g/m² or more, 80 g/m² or more, 90 g/m² or more, 95 g/m² or more, 98 g/m² or more, or 99 g/m² or more, and may be 110 g/m² or less, 120 g/m² or less, 130 g/m² or less, 140 g/m² or less, 150 g/m² or less, 160 g/m² or less, 170 g/m² or less, 180 g/m² or less, 190 g/m² or less, or 200 g/m² or less. Specifically, the basis weight of the packaging material for cigarettes may be 50 to 200 g/m², 60 to 190 g/m², 70 to 180 g/m², 80 to 170 g/m², 90 to 160 g/m², 90 to 150 g/m², 95 to 140 g/m², 95 to 130 g/m², 98 to 120 g/m², or 99 to 110 g/m². According to some embodiments of the present disclosure, when the basis weight of the packaging material for cigarettes satisfies the above numerical range, the packaging material for cigarettes may exhibit a tensile strength at an appropriate level while the moisture permeability thereof may be reduced to an appropriate level. For example, the basis weight of the inner liner may be measured in accordance with KS M ISO 536.

In some examples, when the packaging material for cigarettes is included in an inner liner, the tensile strength of the packaging material for cigarettes in the machine direction (MD) may be 3.0 kgf/15 mm or more, 5 kgf/15 mm or more, 6 kgf/15 mm or more, 7 kgf/15 mm or more, 10 kgf/15 mm or more, or 11 kgf/15 mm or more, and may be 13 kgf/15 mm or less, 14 kgf/15 mm or less, 15 kgf/15 mm or less, 17 kgf/15 mm or less, 18 kgf/15 mm or less, 19 kgf/15 mm or less, or 20 kgf/15 mm or less. Specifically, the tensile strength in the machine direction (MD) may be 3.0 to 20.0 kgf/15 mm, 5 to 19 kgf/15 mm, 6 to 18 kgf/15 mm, 7 to 17 kgf/15 mm, 10 to 15 kgf/15 mm, 11 to 14 kgf/15 mm, or 12 to 13 kgf/15 mm. For example, the tensile strength of the packaging material for cigarettes may be measured in accordance with KS M ISO 1924-2.

In some examples, when the packaging material for cigarettes is included in an inner liner, the whiteness of the packaging material for cigarettes may be 80% or more, 81% or more, 82% or more, 83% or more, 84% or more, 85% or more, 86% or more, 87% or more, 88% or more, 89% or more, 80 to 95%, 81 to 94%, 82 to 93%, 83 to 92%, 84 to 92%, 85 to 92%, 86 to 92%, 87 to 92%, 88 to 92%, or 89 to 92%. Specifically, when the whiteness is within the above numerical range even if the packaging material for cigarettes does not contain a bleaching agent, it is possible to realize a packaging material for cigarettes that is harmless to the human body and environmentally friendly. For example, the whiteness of the packaging material for cigarettes may be measured in accordance with KS M ISO 2470. Here, the bleaching agent is not particularly limited and may be a general bleaching agent commonly used in the field of paper technology. Specifically, the bleaching agent may include a chlorine-based bleaching agent, and more specifically may include chlorine dioxide. As the packaging material for cigarettes according to some embodiments of the present disclosure does not contain a bleaching agent, it is possible to achieve the effect of not generating chlorine gas harmful to the human body during bleaching.

In some examples, when the packaging material for cigarettes is included in an inner liner, the opacity of the inner liner may be 80% or more, 81% or more, 82% or more, 83% or more, 84% or more, 85% or more, 86% or more, 87% or more, 88% or more, 89% or more, 90% or more, 91% or more, 80 to 95%, 81 to 94%, 82 to 93%, 83 to 92%, 84 to 92%, 85 to 92%, 86 to 92%, 87 to 92%, 88 to 92%, 89 to 92%, 90 to 92%, or 91 to 92%. For example, the opacity of the inner liner may be measured in accordance with KS M ISO 2471. According to some embodiments of the present disclosure, when the opacity of the inner liner satisfies the above numerical range, the show-through of the printed image during printing may be effectively prevented.

In some examples, when the packaging material for cigarettes is included in an inner liner, the moisture permeability of the inner liner may be 20 g/m²·24 hr or less, 19 g/m²·24 hr or less, 18 g/m²·24 hr or less, 17 g/m²·24 hr or less, 16 g/m²·24 hr or less, 15 g/m²·24 hr or less, 14 g/m²·24 hr or less, 13 g/m²·24 hr or less, or 12 g/m²·24 hr or less, under the conditions of 38°C and 100% relative humidity (R.H.). Specifically, the moisture permeability may be between greater than 0 and less than or equal to any one of the plurality of upper limit values (g/m²·24 hr). For example, the moisture permeability of the inner liner may be measured in accordance with KS M ISO 15106-2. According to some embodiments of the present disclosure, when the moisture permeability of the packaging material for cigarettes satisfies the above numerical range, the packaging material for cigarettes may exhibit a better effect of maintaining the moisture and flavor of tobacco cut filler, thereby further improving the marketability of the cigarette product.

### Properties of Outer Package

When the packaging material for cigarettes according to some embodiments of the present disclosure is included in an outer package, the thickness of the packaging material for cigarettes may be 100 to 400 µm, 150 to 390 µm, 160 to 380 µm, 200 to 380 µm, or 240 to 370 µm. According to some embodiments of the present disclosure, when the thickness of the outer package satisfies the above numerical range, the outer package may have increased stiffness while the moisture permeability thereof may be lowered to an appropriate level. For example, the thickness of the outer package may be measured in accordance with KS M ISO 534.

In some embodiments of the present disclosure, when the packaging material for cigarettes is included in an outer package, the basis weight of the packaging material for cigarettes may be 200 to 400 g/m², 210 to 390 g/m², 220 to 380 g/m², 230 to 370 g/m^{2,} 240 to 360 g/m², 250 to 350 g/m², 260 to 350 g/m², 270 to 350 g/m², or 280 to 350 g/m². According to some embodiments of the present disclosure, when the basis weight of the packaging material for cigarettes satisfies the above numerical range, the outer package may exhibit a stiffness ta a suitable level while the moisture permeability thereof may be lowered to an appropriate level.

In some embodiments of the present disclosure, when the packaging material for cigarettes is included in an outer package, the whiteness of the packaging material for cigarettes may be 80% or more, 81% or more, 82% or more, 83% or more, or 84% or more. Specifically, the whiteness may be between any one of the plurality of lower limit values (%) and 95%. Specifically, when the whiteness satisfies the above numerical range even if the packaging material for cigarettes does not include a bleaching agent, it is possible to realize a packaging material for cigarettes that is harmless to the human body and environmentally friendly. For example, the whiteness of the packaging material for cigarettes may be measured in accordance with KS M ISO 2470. Here, the bleaching agent may be the same as or different from the bleaching agent described above.

In some embodiments of the present disclosure, when the packaging material for cigarettes is included in an outer package, the opacity of the packaging material for cigarettes may be 90% or more, 91% or more, 92% or more, 93% or more, 94% or more, or 95 to 100%. For example, the opacity of the packaging material for cigarettes may be measured in accordance with KS M ISO 2471. According to some embodiments of the present disclosure, when the opacity of the packaging material for cigarettes satisfies the above numerical range, the show-through of the printed image during printing may be effectively prevented.

According to one embodiment of the present disclosure, there may be provided an outer package composed of the packaging material for cigarettes according to some embodiments. In this case, the packaging material for cigarettes may be composed of the above-described packaging material for cigarettes without being laminated with paper. In some examples, the stiffness of the packaging material for cigarettes in each of the machine direction (MD) and the cross direction (CD) may be 10 to 30 gf/cm, 10 to 25 gf/cm, 15 to 20 gf/cm, or 17 to 19 gf/cm. For example, the stiffness of the packaging material for cigarettes may be measured in accordance with KS M ISO 2493.

According to another embodiment of the present disclosure, there may be provided an outer package including a substrate and paper on the substrate. In this case, the above-described packaging material for cigarettes according to some embodiments may be included on the substrate. Specifically, as the paper is laminated with the substrate, the outer package may have increased stiffness, and at the same time, may exhibit a moisture permeation-blocking effect and a waterproof function of resisting wetting by water, which are difficult to achieve with a paper package.

According to some embodiments of the present disclosure, as several mineral papers are included on the substrate, the smoothness of the substrate may be improved, thereby further improving the ease of printing.

In some embodiments of the present disclosure, the paper may have a basis weight of 150 g/m² or more, 160 g/m² or more, 170 g/m² or more, 180 g/m² or more, or 190 g/m² or more, and 200 g/m² or less, 210 g/m² or less, 220 g/m² or less, 230 g/m² or less, 240 g/m² or less, or 250 g/m² or less. Specifically, the basis weight of the paper may be 150 to 250 g/m², 160 to 240 g/m², 170 to 230 g/m², 180 to 220 g/m², 190 to 210 g/m², or 190 to 200 g/m². According to some embodiments of the present disclosure, when the basis weight of the paper satisfies the above numerical range, the stiffness of the outer package for cigarettes may be adjusted to an appropriate level, so that the transport process may be easily performed, and the sufficient adhesion between regions of the outer package may be achieved.

In some embodiments of the present disclosure, the outer package may further include a printed layer having an engraved pattern or design on one surface of the substrate. Specifically, the substrate may be interposed between the printed layer and the paper. For example, the printed layer is not particularly limited and may be formed by a printing method commonly used in the art. Specifically, the printed layer may be formed by a gravure printing or offset printing method, and more specifically, may be formed by an offset printing method. According to some examples, when the offset printing method is used, it may exhibit an effect of accurately applying ink to a desired location during the printing process, compared to other printing methods.

In some examples, assuming that the thickness of the outer package for cigarettes is 365 µm, the stiffness of the packaging material for cigarettes may be 150 to 250 gf/cm in the MD direction and 100 to 200 gf/cm in the cross direction (CD). In this case, the outer package for cigarettes may be composed of mineral paper laminated with paper. Specifically, the stiffness of the packaging material for cigarettes may be 160 to 240 gf/cm, 170 to 230 gf/cm, 180 to 220 gf/cm, 190 to 210 gf/cm, or 190 to 200 gf/cm in the MD direction, and 110 to 190 gf/cm, 120 to 180 gf/cm, 130 to 170 gf/cm, 140 to 160 gf/cm, or 140 to 150 gf/cm in the CD direction. For example, the stiffness of the packaging material for cigarettes may be measured in accordance with KS M ISO 2493. According to some embodiments of the present disclosure, as the stiffness of the outer package for cigarettes satisfies the above numerical range, deformation of the outer package by various external forces may be minimized, so that an excellent function of packaging cigarettes may be exhibited.

In some embodiments of the present disclosure, when the packaging material for cigarettes is included in the outer package, the packaging material for cigarettes may have a moisture permeability of 15 g/m²·24 hr or less, 14 g/m²·24 hr or less, 13 g/m²·24 hr or less, or 12 g/m²·24 hr or less under conditions of 38°C and 100% R.H. Specifically, the moisture permeability may be between 0 and any one of the plurality of upper limit values (g/m²·24 hr). For example, the moisture permeability of the packaging material for cigarette in the outer package may be measured in accordance with KS M ISO 15106-2.

### 2. Cigarette case

According to another aspect of the present disclosure, there is provided a cigarette case including: an inner liner; and an outer package on the inner liner, wherein at least one of the inner liner and the outer package includes the packaging material for cigarettes according to some embodiments.

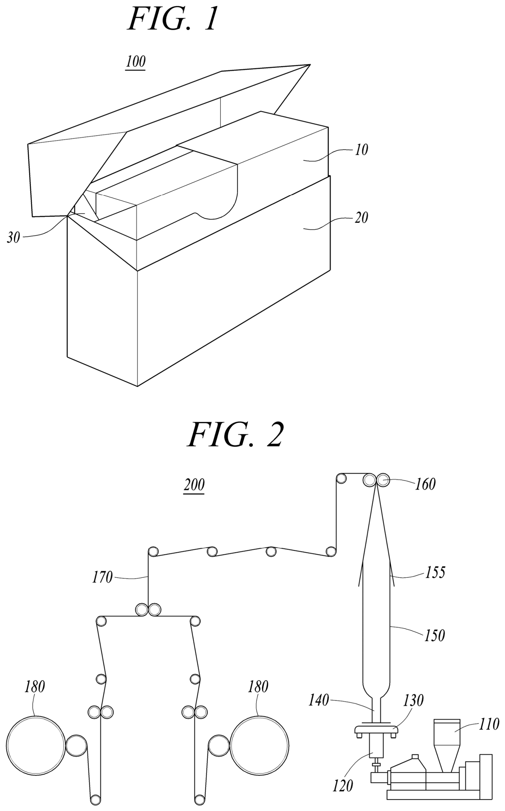

FIG. 1 illustrates a cigarette case according to one embodiment of the present disclosure.

Referring to FIG. 1, a cigarette case 100 according to the present disclosure is a structure that packages a group of cigarettes, and may include an inner liner 10 and an outer package 20.

The inner liner 10 according to the present disclosure may perform the function of packaging multiple cigarettes and at the same time, improve the sustainability of the moisture and flavor of tobacco cut filler.

In some examples, the inner liner 10 may be disposed inside the outer package 20 corresponding to the housing of the cigarette case. In this case, the inner liner 10 may or may not be in contact with the outer package 20.

The outer package 20 according to the present disclosure serves as the main body or housing of the cigarette case 100 and may form the exterior of the cigarette case. The outer package 20 according to the present disclosure may be disposed on the inner liner 10.

If necessary, the cigarette case 100 according to the present disclosure may further include a metal foil 30 to effectively prevent the loss of tobacco flavor. In addition, the metal foil 30 according to the present disclosure may be characterized by maintaining its gloss without being discolored or oxidized for a long period of time even at very high temperatures.

In some examples, the metal foil 30 may include an aluminum foil. The aluminum foil is inexpensive among thin metal foils and may have better gloss retention properties.

In some embodiments of the present disclosure, the inner liner 10 and the outer package 20 may include the packaging material for cigarettes according to some embodiments. Specifically, as the above-described packaging material for cigarettes according to some embodiments is included in both the inner liner and the outer package, it may exhibit an improved moisture permeation-blocking effect and an improved waterproof effect of resisting wetting by water, which are difficult to achieve with a paper package.

As used herein, the term "mineral paper" is defined as including the above-described polyolefin and the above-described calcium carbonate.

FIG. 2 shows a production system capable of producing a mineral paper that is included in a packaging material for cigarettes according to some embodiments of the present disclosure.

Referring to FIG. 2, a mineral paper production system 200 according to the present disclosure may include an extruder 110, a mold inlet 120, a cooling means 130, a tube 140, a folding means 155, first rolls 160, a cutting means 170, and a second roll 180.

In some embodiments of the present disclosure, the extruder 110 may be a device that mixes and melts both the polyolefin and the calcium carbonate to produce a molten material.

In some other embodiments of the present disclosure, the extruder 110 may be a device that mixes and melts all of the recycled polyolefin, calcium carbonate, and stearic acid to produce a molten material.

In some examples, the extruder 110 is not particularly limited and may specifically include a twin screw. For example, the rotation speed of the screw may be 70 to 100 rpm, and the diameter of the screw may be 100 to 150 mm.

The mold inlet 120 according to the present disclosure may be a device that molds the molten material melted by the extruder 110. The molten material may be molded according to the shape of the mold, and then cooled by a cooling means 130 to be described later, thereby producing a pre-sheet. Specifically, the mold inlet 120 may be connected to the extruder 110, and more specifically, may be connected directly to the extruder 110.

The cooling means 130 according to the present disclosure may cool the molten material using cold air to produce a molded body. For example, the temperature of the air may be 60 to 90°C, or 70 to 80°C. Specifically, the cooling means 130 may be connected to the mold inlet 120, and more specifically, may be connected directly to the mold inlet 120.

The tube 140 according to the present disclosure may mean a part or region where a pre-sheet is produced. Specifically, the pre-sheet that has passed through the tube 140 may be stretched in the lengthwise and widthwise directions by first rolls 160 to be described later under a predetermined temperature condition for a predetermined time. Accordingly, the mechanical properties and thickness of the mineral paper may be controlled. Specifically, the tube 140 may be connected to the cooling means 130.

The folding means 155 according to the present disclosure may be a device that symmetrically folds the pre-sheet. For example, the pre-sheet may be folded in half by the folding means 155.

The first rolls 160 according to the present disclosure may perform the function of pulling up the pre-sheet so that the pre-sheet may be stretched. Although FIG. 2 shows that the number of the first rolls is 2, the number of the first rolls may be variously changed.

The cutting means 170 according to the present disclosure may perform the function of cutting the folded pre-sheet. For example, as the cutting means 170 cuts the folded pre-sheet is cut, each cut pre-sheet may be transported to a second roll 180 to be described later.

The second roll 180 according to the present disclosure may be a device that transports the cut pre-sheet to obtain a mineral paper. Specifically, the second roll 180 may be connected to the cutting means 170, and more specifically, may be connected directly to the cutting means 170.

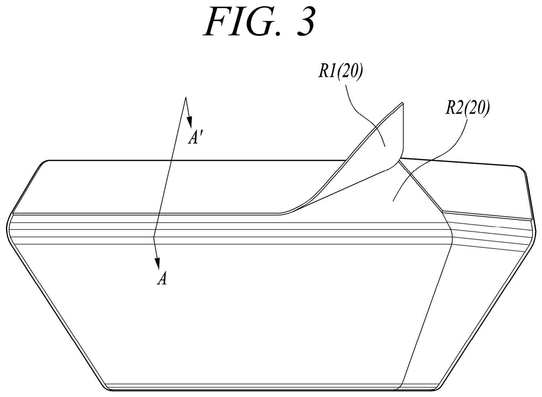

FIG. 3 shows that one side of an outer package according to one embodiment of the present disclosure is peeled off. For example, one side of the outer package paper may be a side surface of the outer package.

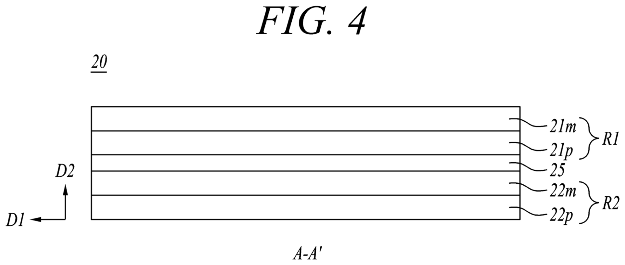

FIG. 4 is a cross-sectional view taken along line A-A' of FIG. 3.

Referring to FIGS. 3 and 4, the outer package 20 according to some embodiments of the present disclosure may include a first region R1, a second region R2, and an adhesive layer 25 disposed between the first and second regions R1 and R2.

In the present specification, a first mineral paper 21m and a second mineral paper 22m may each independently include the same or different packaging materials for cigarettes according to some embodiments. For example, the first mineral paper 21m may include the polyolefin and the calcium carbonate, and the second mineral paper 22m may include the polyolefin and the calcium carbonate. For example, at least one of the density and molecular weight of the polyolefin included in each of the mineral papers may be the same or different between the mineral papers, and at least one of the crystal form, whiteness, BET specific surface area, and average particle size of the calcium carbonate may be the same or different between the mineral papers.

In some embodiments of the present disclosure, the first region R1 may include a first paper 21p and a first mineral paper 21m disposed on the first paper 21p. Specifically, the first mineral paper 21m may be disposed directly on the first paper 21p. For example, the upper surface of the first mineral paper 21m may be an exposed surface of the outer package 20, and if necessary, a printed layer (not shown) may be disposed on the upper surface of the first mineral paper 21m.

In some embodiments of the present disclosure, the first paper 21p may be connected to the second mineral paper 22m to be described later through an adhesive layer 25. If a general adhesive is used as an adhesive to connect the first mineral paper 21m to the second mineral paper 22m without the presence of the first paper 21p, there is a problem of poor adhesion. According to some embodiments of the present disclosure, by controlling the solid content of an adhesive resin included in the adhesive layer 25, it is possible to realize an outer package having excellent adhesion between the second mineral paper 22m and the first paper 21p.

In some examples, the first paper 21p may be single-or multi-layered. For example, the basis weight of the first paper 21p may be 150 to 250 g/m².

The second region R2 according to the present disclosure may include a second paper 22p and a second mineral paper 22m. Specifically, the second mineral paper 22m may be disposed on the second paper 22p, and more specifically, may be disposed directly on the second paper 22p.

In FIG. 4, a first direction D1 may mean, for example, the lengthwise direction of the outer package 20 or the lengthwise direction of a cigarette accommodated in the outer package 20. A second direction D2 may be a direction intersecting the first direction D1, and specifically, may be a direction perpendicular to the first direction D1. In some examples, the first region R1 may overlap with the second region R2 in the second direction D2. Here, the term "overlap" may mean that the first region R1 and the second region R2 include at least one region in which they overlap each other in the second direction D2. That is, if there is a region in which the first region R1 is in direct contact with the second region R2 or they overlap each other in the second direction D2 even though they are not in direct contact with each other, the first region R1 may be defined as overlapping with the second region R2.

The adhesive layer 25 according to the present disclosure may be disposed between the second mineral paper 22m and the first paper 21p to connect the first region R1 and the second region R2 to each other.

In some embodiments of the present disclosure, the adhesive layer 25 may include an adhesive resin having a solid content of 51 to 53 wt%. Specifically, when the solid content of the adhesive resin satisfies the above numerical range, the adhesion between the first paper 21p and the second mineral paper 22m may be better.

In some embodiments of the present disclosure, the adhesive resin may include an ethylene-vinyl acetate copolymer that provides adhesion.

In some embodiments of the present disclosure, the content of vinyl acetate in the ethylene-vinyl acetate copolymer can be 40 to 60 wt%, 42 to 58 wt%, 45 to 55 wt%, 48 to 53 wt%, 49 to 51 wt%, or 50 to 51 wt%. Depending on the content of vinyl acetate in the ethylene-vinyl acetate copolymer, the density and flexibility of the ethylene-vinyl acetate copolymer may vary. According to some embodiments of the present disclosure, when the content of the vinyl acetate satisfies the above numerical range, the adhesion between the first region R1 and the second region R2 may be further improved.

In some embodiments of the present disclosure, the content of the ethylene-vinyl acetate copolymer based on the total weight of the adhesive layer may be 70 to 99 wt%, 71 to 99 wt%, 75 to 99 wt%, 80 to 99 wt%, or 85 to 99 wt%. According to some embodiments of the present disclosure, when the content of the ethylene-vinyl acetate copolymer satisfies the above numerical range, the adhesion between the first region R1 and the second region R2 may be further improved. Here, the total weight of the adhesive layer may mean the total weight of the solid content of the adhesive resin excluding the solvent (e.g., water) in some embodiments.

In some examples, the weight-average molecular weight (Mw) of the ethylene-vinyl acetate copolymer may be 100,000 to 900,000 g/mol, 150,000 to 800,000 g/mol, 200,000 to 700,000 g/mol, or 250,000 to 650,000 g/mol. Specifically, when the weight-average molecular weight (Mw) of the ethylene-vinyl acetate copolymer satisfies the above numerical range, the viscosity of the adhesive resin may be adjusted to an appropriate level, so that the processability or applicability of the adhesive resin may be improved, and the miscibility thereof with a plasticizer may also be adjusted to an appropriate level.

In some embodiments of the present disclosure, the adhesive resin may further include a plasticizer that facilitates segmental motion of the ethylene-vinyl acetate copolymer.

For example, the plasticizer is not particularly limited and may specifically include at least one of a phthalate-plasticizer and a non-phthalate-based plasticizer. More specifically, the plasticizer may include at least one selected from the group consisting of phthalic acid esters such as dibutyl phthalate, di-n-octyl phthalate, bis(2-ethylhexyl) phthalate, bis(2-ethylhexyl) terephthalate, di-n-decyl phthalate, and diisodecyl phthalate; adipic acid esters such as bis(2-ethylhexyl) adipate, diisodecyl adipate, and di-n-octyl adipate; sebacic acid esters such as bis(2-ethylhexyl) sebacate and di-n-butyl sebacate; azelaic acid esters such as bis(2-ethylhexyl) azelate; citric acid esters such as tributyl acetyl citrate; paraffins such as chlorinated paraffin; glycols such as polypropylene glycol; epoxy-modified vegetable oils such as epoxidized soybean oil and epoxidized linseed oil; phosphoric acid esters such as trioctyl phosphate and triphenyl phosphate; phosphorous acid esters such as triphenyl phosphite; ester oligomers such as esters of adipic acid with 1,3-butylene glycol, and esters of benzoic acid with dipropylene glycol; low-molecular-weight polymers such as low-molecular-weight polybutene, low-molecular-weight polyisobutylene, and low-molecular-weight polyisoprene; acrylic oligomers such as poly-n-butyl acrylate and poly-2-ethylhexyl acrylate; paraffin oils such as Diana process oil PW series (Idemitsu Kosan Co., Ltd.), SUNPURELW70 or P series (Nippon Sun Oil Co., Ltd.); naphthenic oils such as SUNPURE N90 and NX90, SUNTHENE series (Nippon Sun Oil Co., Ltd.); and aroma oils such as JSO AROMA790 (Nippon Sun Oil Co., Ltd.), Vivatec500 (H&R Co., Ltd.)

In some embodiments of the present disclosure, the content of the plasticizer may be 1 part by weight or more, 2 parts by weight or more, 3 parts by weight or more, 4 parts by weight or more, 5 parts by weight or more, or 6 parts by weight or more, and 7 parts by weight or less, 8 parts by weight or less, 9 parts by weight or less, or 10 parts by weight or less, based on 100 parts by weight of the ethylene-vinyl acetate copolymer. Specifically, the content of the plasticizer may be 1 to 10 parts by weight, 1 to 9 parts by weight, 2 to 8 parts by weight, 3 to 7 parts by weight, 4 to 7 parts by weight, 5 to 7 parts by weight, or 6 to 7 parts by weight, based on 100 parts by weight of the ethylene-vinyl acetate copolymer. According to some embodiments of the present disclosure, when the content of the plasticizer satisfies the above numerical range, the segmental motion of the ethylene-vinyl acetate copolymer may be easily controlled, thereby further improving the adhesion between the first paper 21p and the second mineral paper 22m, thus improving the durability of the outer package.

In some embodiments of the present disclosure, the solid content of the adhesive resin may be 50 to 55 wt%, 50 to 54 wt%, 50 to 53 wt%, 51 to 53 wt%, or 52 to 53 wt%. According to some embodiments of the present disclosure, when the solid content of the adhesive resin satisfies the above numerical range, the adhesion between the first paper 21p and the second mineral paper 22m may be further improved, so that the durability of the outer package may be excellent.

In some examples, the pH of the adhesive resin may be 4 to 5.

In some examples, the viscosity of the adhesive resin may be 590 to 610 cps, 595 to 605 cps, or 600 to 605 cps, as measured using a Brookfield RVT viscometer (spin 2/20 rpm) at 20°C. Specifically, when the viscosity of the adhesive resin satisfies the above numerical range, the processability of the adhesive resin may be improved and at the same time, the adhesion between the first paper 21p and the second mineral paper 22m may be further improved.

### Mode for Disclosure

Hereinafter, examples of the present disclosure will be described in detail so that those skilled in the art to which the present disclosure pertains can easily carry out the present disclosure. However, these examples are merely exemplary, and the scope of the present disclosure is not limited by the following contents.

### [Production Example 1: Production of Inner Liner]

### <Example 1-1: Production of Inner Liner Including Mineral Paper>

### Step of grinding calcium carbonate:

Precipitated calcium carbonate having a specific gravity of 2.3, a refractive index (n_{D}) of 1.56, and a whiteness of 96% was ground, thereby preparing calcium carbonate powder having an average particle size (D₅₀) of about 2.5 µm.

### Step of melting a mixture of HDPE and calcium carbonate powder:

A mixture of high-density polyethylene (HDPE) having a density of 0.94 to 0.97 g/cm³ and the calcium carbonate powder at a weight ratio of 2:8 was introduced into the extruder 110 including the twin screw (diameter: 130 mm, rotation speed: 80 RPM) shown in FIG. 2, and then melted at 200°C to produce a molten material.

### Step of producing a pre-sheet by pouring and molding the molten material in a mold:

The molten material was poured into a mold inlet 120, and then cooled with cold air at 80°C coming from the cooling means 130, thereby producing a pre-sheet in the tube 140.

### Step of producing a sheet by stretching the pre-sheet:

The pre-sheet was stretched in the lengthwise and widthwise directions at 110°C for 5 minutes by the first rolls 160 shown in FIG. 2, and then passed through the folding means 155, thereby producing a symmetrically folded sheet.

### Step of producing an inner liner by post-processing the sheet:

The symmetrically folded sheet was cut by the cutting means 170, and then wound around the second roll 180 to produce mineral paper, thereby finally producing an inner liner having a thickness of 92 µm.

### <Comparative Example 1: Preparation of Commercial Paper Inner Liner>

A 61 µm-thick paper inner liner (a cigarette caseaging inner liner product manufactured by Kookil Paper Ltd. Corp.) commonly used in the art was prepared.

### [Experimental Example 1: Evaluation of Properties of Inner Liner]

The properties of the inner liner of each of Example 1-1 and Comparative Example 1 were measured using the evaluation methods shown in Table 1 below, and the results are shown in Table 1 below.

**[Table 1]**

| | Evaluation method | Example 1-1 | Comparative Example 1 |
|---|---|---|---|
| Inner liner | - | Mineral paper | Paper |
| Thickness (µm) | KS M ISO 534 | 92 | 61 |
| Basis weight (g/m²) | KS M ISO 536 | 99 | 50 |
| Tensile strength (MD direction, kgf/15 mm) | KS M ISO 1924-2 | 13 kgf/15 mm | 5.3 kgf/15 mm |
| Whiteness (%) | KS M ISO 2470 | 91.6% | 82% |
| Opacity (%) | KS M ISO 2471 | 91.8% | 68% |
| Moisture permeability (g/m²·24hr) at 38°C and 100% R.H. | KS M ISO 15106-2 | 12 | out of allowable range |

Referring to Table 1 above, Example 1-1 showed the effect of significantly lowering the moisture permeability and increasing all of the opacity, whiteness, and tensile strength, by including the mineral paper, compared to Comparative Example 1.

### [Experimental Example 2: Evaluation of Dead-Fold Properties of Inner liner]

"Excellent dead-fold properties" means that the folded portion of the inner liner is not restored so that the folded state is better retained. Specifically, in order to compare the dead-fold properties between the inner liners of Example 1-1 and Comparative Example 1, an expert with more than 10 years of experience in the tobacco field was asked to evaluate the dead-fold properties as a criterion for determining the defect rate under the conditions of a conventional cigarette case machine process. As a result, the dead-fold properties were rated as follows and the results are shown in Table 2 below: O = excellent dead-fold properties, △ = moderate dead-fold properties, and X = poor dead-fold properties.

**[Table 2]**

| | Example 1-1 | Comparative Example 1 |
|---|---|---|
| Inner liner | Mineral paper | Paper |
| Dead-fold | O | △ |

Referring to Table 2 above, Example 1-1 showed excellent dead-fold properties by including the mineral paper compared to Comparative Example 1.

### [Experimental Example 3: Changes in Moisture Content of Tobacco Cut Filler in Inner Liner for Cigarettes

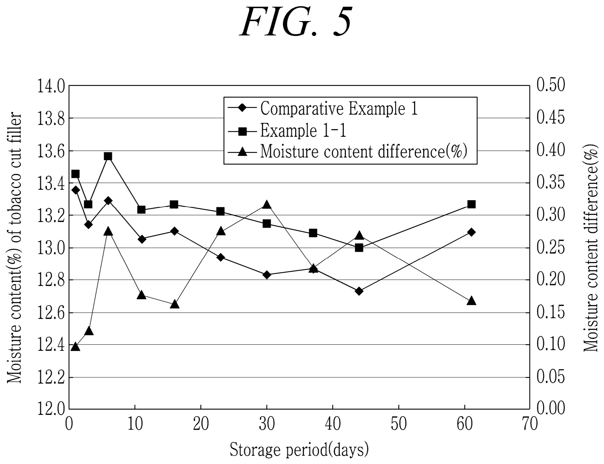

FIG. 5 is a graph showing changes in moisture content of tobacco cut filler in the inner liners according to Example 1-1 and Comparative Example 1. Specifically, a cigarette containing tobacco cut filler was accommodated in the internal space defined by each of the cigarette inner liners according to Example 1-1 and Comparative Example 1 at 25°C and 50% relative humidity, and then the moisture content (%) of the tobacco cut filler was measured as a function of the storage period (days). In FIG. 5, the difference in moisture content of the tobacco cut filler is the difference in moisture content of the tobacco cut filler accommodated in the inner liner of Example 1-1 from the moisture content of the tobacco cut filler accommodated in the inner liner of Comparative Example 1.

Referring to FIG. 5, it was confirmed that the moisture content of the tobacco cut filler accommodated in the internal space of the cigarette inner liner according to Example 1-1 was maintained at a higher level than that of Comparative Example 1 even after a long period of time, and the degree of change in moisture content was also lower in Example 1-1 than in Comparative Example 1.

### [Experimental Example 4: Changes in Moisture Content of Inner Liner for Cigarettes]

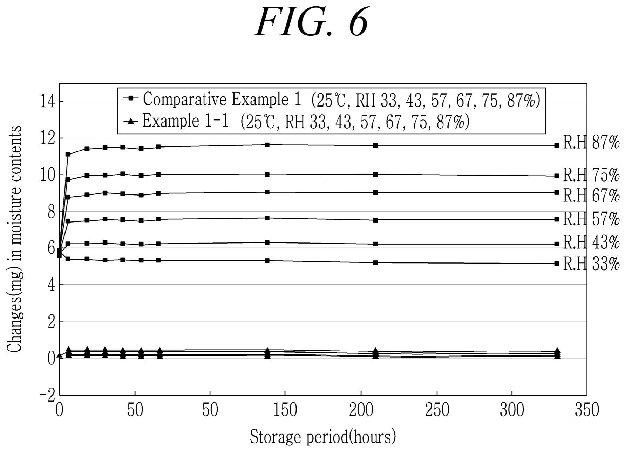

FIG. 6 is a graph showing the changes in moisture contents of the inner liners according to Example 1-1 and Comparative Example 1 as a function of storage time under different relative humidity conditions. Specifically, while the experimental temperature was fixed to 25°C and the relative humidity was adjusted to 33%, 43%, 57%, 67%, 75%, and 87%, the moisture content change (mg) of each inner liner for cigarettes was measured as a function of storage time.

Referring to FIG. 6, it was confirmed that the inner liner for cigarettes according to Example 1-1 showed almost no change in moisture content even when the relative humidity changed. On the other hand, the inner liner for cigarettes according to Comparative Example 1 showed a tendency for the change in moisture content to rapidly increase as the relative humidity increased.

From the above experimental results, it was confirmed that the inner liner for cigarettes including the mineral paper showed a smaller change in moisture content under storage conditions with various relative humidities than the inner liner for cigarettes made of paper, suggesting that it can effectively prevent changes in moisture content of cut tobacco filler.

### [Preparation Example 1: Production of Recycled High-Density Polyethylene]

Pellet-type waste high-density polyethylene was fed into a Banbury mixer (Brabender HAAKE RHEOMIX 600P), and then the temperature of the mixer was adjusted to 170°C, the mixing speed to 40 rpm, and the mixing time to 10 minutes, thereby producing recycled high-density polyethylene.

### [Example 1-2: Production of Inner Liner Including Recycled Polyolefin]

Recycled high-density polyethylene (HDPE) having a density of 0.94 to 0.97 g/cm³, produced in Preparation Example 1, and calcium carbonate powder were mixed together at a weight ratio of 2:8 to obtain a base material. An inner liner was produced in the same manner as in Example 1-1, except that 100 parts by weight of the base material and 0.5 parts by weight of stearic acid were introduced into the extruder 110 including the twin screw (diameter: 130 mm, rotation speed: 80 rpm) shown in FIG. 2, and then melted at 200°C to produce a molten material.

### [Experimental Example 5: Evaluation of Biodegradability of Inner Liner]

The biodegradability of the inner liner produced by the method according to each of Example 1-2 and Comparative Example 1 was measured in accordance with the ISO 14855-1 standard. Specifically, for each of the inner liners produced by the methods according to Example 1-2 and Comparative Example 1, the biodegradability of each of mineral paper and paper was measured by measuring the content of carbon dioxide (CO₂) generated under composting conditions, and the results are shown in Table 3 below.

**[Table 3]**

| | Example 1-2 | Comparative Example 1 |
|---|---|---|
| Inner liner | Mineral paper | Paper |
| Biodegradability (%) | 85% | 75% |

Referring to Table 3 above, it can be seen that the inner liner of Example 1-2 has a higher biodegradability than the paper inner liner of Comparative Example 1 made of pulp fibers, as it includes stearic acid that promotes biodegradation of the recycled polyolefin. When the inner liner of Example 1-2 is landfilled, the biodegradability of the recycled polyolefin increases due to the action of geothermal heat and stearic acid, and the calcium carbonate returns to the soil, suggesting that the inner liner is made of environmentally friendly materials.

### [Preparation Example 2: Production of Adhesive Resin]

An adhesive resin having the composition shown in Table 4 below was produced. The remainder other than the solid content was composed of water. In Table 4 below, the contents of the plasticizer and the filler are expressed in weight parts based on 100 weight parts of the ethylene-vinyl acetate copolymer.

### Viscosity of Adhesive Resin

The viscosity of the adhesive resin in Table 4 below was measured using a Brookfield RVT viscometer (spin 2/20 rpm) at 20°C.

### Solid Content

The solid content of the adhesive resin in Table 4 below was analyzed in accordance with KS M3705.

**[Table 4]**

| | Comparative Preparation Example 1 | Comparative Preparation Example 2 | Preparation Example |
|---|---|---|---|
| Viscosity (cps) | 570 | 15,000 | 600 |
| Solid content (wt%) | 50.4 | 54 | 52 |
| EVA¹⁾ | 100 parts by weight | 100 parts by weight | 100 parts by weight |
| Plasticizer²⁾ | - | 10 parts by weight | 7 parts by weight |
| Filler³⁾ | - | 10 parts by weight | - |
| 1) EVA: ethylene-vinyl acetate copolymer having a vinyl acetate content of about 50 wt% | | | |
| 2) Plasticizer: dibutyl phthalate (DBP) | | | |
| 3) Filler: calcium carbonate | | | |

### [Production Example 2: Production of Outer Package]

### <Example 2-1: Production of Outer Package Including Mineral Paper>

### Step of grinding calcium carbonate:

Precipitated calcium carbonate having a specific gravity of 2.3, a refractive index (n_{D}) of 1.56, and a whiteness of 96% was ground, thereby preparing calcium carbonate powder having an average particle size (D₅₀) of about 6 µm.

### Step of melting a mixture of HDPE and calcium carbonate powder:

A mixture of high-density polyethylene (HDPE) having a density of 0.94 to 0.97 g/cm³ and the calcium carbonate powder at a weight ratio of 1.5:8.5 was introduced into the extruder 110 including the twin screw (diameter: 130 mm, rotation speed: 80 RPM) shown in FIG. 2, and then melted at 200°C to produce a molten material.

### Step of producing a pre-sheet by pouring and molding the molten material in a mold:

The molten material was poured into a mold inlet 120, and then cooled with cold air at 70°C coming from the cooling means 130, thereby producing a pre-sheet in the tube 140.

### Step of producing a sheet by stretching the pre-sheet:

The pre-sheet was stretched in the lengthwise and widthwise directions at 100°C for 5 minutes by the first rolls 160 and tube 150 shown in FIG. 2, and then passed through the folding means 155, thereby producing a folded sheet.

### Step of producing an outer package by post-processing the sheet:

The folded sheet was cut by the cutting means 170, and then wound around the second roll 180 to produce mineral paper, thereby finally producing an outer package having a thickness of 250 µm.

### <Example 3: Production of Outer Package Including Mineral Paper Laminated with Paper>

Mineral paper having a thickness of 100 µm was produced by the method according to the above Example 2-1. An adhesive resin according to the Preparation Example was applied to one surface of the mineral paper, and then dried at 110°C for 3 minutes. One surface of the mineral paper having the adhesive resin applied thereto was laminated with paper, thereby producing an outer package of Example 3. Here, the basis weight of the paper was 190 g/m² and the thickness of the paper was 265 µm.

### < Comparative Example 2: Preparation of Commercial Outer Paper Package>

A 280-µm-thick outer paper package (Ivory paperboard product for cigarette outer packaging manufactured by Hanchang Paper Co., Ltd.) commonly used in the art was prepared.

### [Experimental Example 6: Properties of Outer Package]

The properties of the outer packages according to Example 2-1, Example 3 and Comparative Example 2 were measured using the evaluation methods shown in Table 5 below, and the results are shown in Table 5 below.

**[Table 5]**

| | Evaluation method | Example 2-1 | Example 3 | Comparative Example 2 |
|---|---|---|---|---|
| Outer package | - | Mineral paper | Mineral paper laminated with paper | Paper |
| Thickness (µm) | KS M ISO 534 | 250 | 365 | 280 |
| Basis weight (g/m²) | KS M ISO 536 | 346 | 296 | 220 |
| Whiteness (%) | KS M ISO 2470 | 84.4 | 89 | 85 |
| Opacity (%) | KS M ISO 2471 | 95.6 | 99 | - |
| Stiffness (gf/cm) | KS M ISO 2493 | MD: 17.51 | MD: 195 | MD: 58 |
| | | CD: 17.51 | CD: 145 | CD: 29 |
| Moisture permeability (g/m²·24 hr) at 38°C and 100% | KS M ISO 15106-2 | 11 | 12 | 1,000 or more |

Referring to Table 5 above, Examples 2-1 and 3 showed a significantly lower moisture permeability at 38°C and 100% R.H. by including the mineral paper, compared to Comparative Example 2.

In addition, when comparing Examples 2-1 and 3 from the viewpoint of physical properties depending on the configuration of the outer package, the mineral paper laminated with paper showed a significantly high stiffness while showing high opacity and whiteness.

### [Example 2-2: Production of Outer Package Including Recycled Polyolefin]

Recycled high-density polyethylene (HDPE) having a density of 0.94 to 0.97 g/cm³, produced in Preparation Example 1, and calcium carbonate powder were mixed together at a weight ratio of 1.5:8.5 to obtain a base material. An outer package was produced in the same manner as in Example 2-1, except that 100 parts by weight of the base material and 0.5 parts by weight of stearic acid were introduced into the extruder 110 including the twin screw (diameter: 130 mm, rotation speed: 80 rpm) shown in FIG. 2, and then melted at 200°C to produce a molten material.

### [Experimental Example 7: Evaluation of Biodegradability of Outer Package]

The biodegradability of the outer package according to each of Example 2-2 and Comparative Example 2 was measured in accordance with the ISO 14855-1 standard. Specifically, for each of the outer packages according to Example 2-2 and Comparative Example 2, the biodegradability was measured by measuring the content of carbon dioxide (CO₂) generated under composting conditions, and the results are shown in Table 6 below.

**[Table 6]**

| | Example 2-2 | Comparative Example 2 |
|---|---|---|
| Outer package | Mineral paper | Paper |
| Biodegradability (%) | 78% | 58% |

Referring to Table 6 above, Example 2-2 showed an effect of increasing the biodegradability by including the mineral paper compared to Comparative Example 2.

### [Production Example 3: Production of Outer Packages with Different Type of Adhesive Resin

### <Examples 4 and 5: Outer Package with Different Type of Adhesive Resin Than Example 3>

Outer packages according to Examples 4 and 5 were produced in the same manner as in Example 3, except that the adhesive resin of each of Comparative Preparation Example 1 (Example 4) and Comparative Preparation Example 2 (Example 5) was instead of the adhesive resin of the Preparation.

### [Experimental Example 8: Evaluation of Adhesion between Mineral Paper (MP) Surface and Paper Surface]

The adhesion between one surface of the mineral paper and one surface of the paper laminated with the mineral paper in the outer package according to each of Examples 3 to 5 was evaluated according to the following criteria.

### Adhesion evaluation criteria:

An adhesive resin was applied to one surface of the mineral paper in the outer package according to each of Examples 3 to 5, and then the mineral paper was laminated with paper, followed by curing for 24 hours. Thereafter, evaluation was performed according to the following criteria, and the results are shown in Table 7 below: O = the paper surface is completely destroyed when separating the mineral paper and the paper from each other; △ = the paper surface is partially destroyed; and X = a simple peeling phenomenon occurs. A higher degree of destruction of the paper surface may mean better adhesion.

**[Table 7]**

| | Example 3 | Example 4 | Example 5 |
|---|---|---|---|
| Adhesive resin | Preparation Example | Comparative Preparation Example 1 | Comparative Preparation Example 2 |
| Solid content (wt%) | 52 | 50.4 | 54 |
| Adhesion (between mineral paper (MP) surface and paper surface) | O | Δ | X |

Referring to Table 7 above, it was confirmed that, when the content of solids in the adhesive resin of Example 3 was 51 to 53 wt%, the adhesion between one surface of the mineral paper and the paper surface further increased.

Although the preferred embodiments of the present disclosure have been described in detail above, the scope of the present disclosure is not limited thereto, and various modifications and improvements made by those skilled in the art using the basic concept of the present disclosure defined in the following claims also fall within the scope of the present disclosure.

### [Description of Reference Numerals]

| | | | |
|---|---|---|---|
| 10: | inner liner; | 20: | outer package |
| 21m: | first mineral paper; | 21p: | first paper |
| 22m: | second mineral paper; | 22p: | second paper |
| 25: | adhesive layer | 30: | metal foil |
| 100: | cigarette case | 110: | extruder |
| 120: | mold inlet | 130: | cooling means |
| 140: | tube | 155: | folding means |
| 160: | first rolls | 170: | cutting means |
| 180: | second roll | 200: | mineral paper production system |
| R1: | first region | R2: | second region |

## Claims

1. A packaging material for cigarettes comprising:
a polyolefin; and
a calcium carbonate.

2. The packaging material for cigarettes according to claim 1, wherein the polyolefin has a density of 0.90 g/cm³ or more and 1.00 g/cm³ or less.

3. The packaging material for cigarettes according to claim 1, wherein the calcium carbonate has a whiteness of 94% or more as measured in accordance with ISO 2469.

4. The packaging material for cigarettes according to claim 1, wherein a crystal form of the calcium carbonate is a precipitated calcium carbonate (PCC) or a ground calcium carbonate (GCC).

5. The packaging material for cigarettes according to claim 1, wherein a weight ratio between the polyolefin and the calcium carbonate is 1:9 or more and 3:7 or less.

6. The packaging material for cigarettes according to claim 1, further comprising stearic acid,
wherein the polyolefin comprises a recycled polyolefin.

7. The packaging material for cigarettes according to claim 6, wherein a content of the stearic acid is 0.1 parts by weight or more and 2 parts by weight or less based on 100 parts by weight of a base material composed of the recycled polyolefin and the calcium carbonate.

8. The packaging material for cigarettes according to claim 6, wherein the packaging material for cigarettes has a biodegradability of 75% or more as measured according to ISO 14855-1 standard.

9. A cigarette case comprising:
an inner liner; and
an outer package on the inner liner,
wherein at least one of the inner liner and the outer package comprises the packaging material for cigarettes according to claim 1.

10. The cigarette case according to claim 9, wherein the outer package further comprises paper on the packaging material for cigarettes.

11. The cigarette case according to claim 10, wherein the paper has a basis weight of 150 g/m² or more and 250 g/m² or less.

12. The cigarette case according to claim 9, wherein the inner liner has a moisture permeability of 20 g/m²·24 hr or less as measured according to KS M ISO 15106-2 standard under conditions of 38°C and 100% relative humidity.

13. The cigarette case according to claim 9, wherein the outer package comprises:
a first region comprising a first paper and a first mineral paper on the first paper;
a second region comprising a second paper and a second mineral paper on the second paper; and
an adhesive layer disposed between the first region and the second region,
wherein the adhesive layer is disposed between the first paper and the second mineral paper, and
the first mineral paper and the second mineral paper comprise the same or different packaging materials for cigarettes.

14. The cigarette case according to claim 13, wherein the adhesive layer comprises an ethylene-vinyl acetate copolymer and a plasticizer.

15. The cigarette case according to claim 14, wherein a content of the plasticizer is 1 part by weight or more and 10 parts by weight or less based on 100 parts by weight of the ethylene-vinyl acetate copolymer.
